# EUROPÄISCHE PATENTANMELDUNG

(11) **EP 2 341 595 A1**
(43) Veröffentlichungstag der Anmeldung: **06.07.2011**
(21) Anmeldenummer: 09016154.8
(22) Anmeldetag: 31.12.2009
(51) Int. Cl.: H02J 3/38

(54) **Verfahren zum Betrieb einer Photovoltaik-Anlage und Photovoltaik-Anlage zur Durchführung des Verfahrens**

(71) Anmelder: Adensis GmbH, 01129 Dresden (DE)
(72) Erfinder: Beck, Bernhard, 97332 Volkach OT Dimbach (DE)

(57) **Zusammenfassung**

Das Verfahren zum Betrieb einer Photovoltaik-Anlage mit einer Vielzahl von Photovoltaik-Modulen (m) umfasst einen an die Photovoltaik-Module (m) anschließbaren ersten Gleichstrom-Motor (5), dessen Motorwelle (17) an die Welle (15) eines Drehstrom-Generators (13) angekoppelt werden kann, wobei der Drehstrom-Generator (13) an ein Stromversorgungsnetz (26) anschließbar ist. Die Motorwelle (19) eines zweiten Gleichstrom-Motors (11) ist ebenfalls mit der Welle (15) verbindbar, und die von den Photovoltaik-Modulen (m) erzeugte elektrische Energie (E1, E2) wird zunächst nur zum Antrieb des ersten Gleichstrom-Motors (5) verwendet. Erst im weiteren Betriebsverlauf wird sie nach einem Umschaltvorgang auf beide Gleichstrom-Motoren (5, 11) aufgeteilt. Der Ersatz des bisher üblichen einzigen großen Gleichstrom-Motors durch zwei kleinere, getrennt zuschaltbare Gleichstrom-Motoren (5, 11) mit geringerer Nennleistung führt zu einer Beschleunigung des Aufschaltens der Photovoltaik-Anlage an das Stromversorgungsnetz (26).

## Beschreibung

Die Erfindung betrifft ein Verfahren zum Betrieb einer Photovoltaik-Anlage mit einer Vielzahl von Photovoltaik-Modulen und mit einem an die Photovoltaik-Module anschließbaren ersten Gleichstrom-Motor, dessen Motorachse an eine Welle eines Drehstrom-Generators ankoppelbar ist, wobei der Drehstrom-Generator an ein Stromversorgungsnetz anschließbar ist. Mit einem solchen Verfahren soll insbesondere der bei einer großen Anlage vom Drehstrom-Generator erzeugte Wechselstrom in ein Stromversorgungsnetz, vorzugsweise in ein öffentliches Netz, eingespeist werden. Die Anlage hat insbesondere eine Leistung von über 1 MW, also eine relativ hohe Leistung.

Die Erfindung betrifft auch eine Photovoltaik-Anlage zur Durchführung des Verfahrens.

Es sind Photovoltaik-Anlagen bekannt, bei denen der von den Photovoltaik-Modulen insgesamt gelieferte Gleichstrom mittels eines elektrischen Wechselrichters oder Umformers in Wechselstrom oder Drehstrom umgewandelt wird, der dann in ein Stromversorgungsnetz eingespeist wird. Zur Zeit werden auf dem Markt für Großanlagen elektrische Wechselrichter mit Bauelementen auf Halbleiterbasis angeboten, die für eine Leistung von bis zu 700 kW ausgelegt sind. Für eine Photovoltaik-Anlage mit einer Leistung größer als 1 MW müssen mehrere rein elektrische Wechselrichter bereitgestellt werden. Beispielsweise werden heutzutage für eine Solar-Anlage einer Leistung von 2,5 MW mindestens 8 elektrische Wechselrichter eingesetzt, von denen jeder für eine Leistung von 330 kW ausgelegt ist.

Aus der DE 100 61 724-A1 ist es bekannt, eine Vielzahl von elektronischen Wechselrichtern vorzusehen, die über ein relativ komplexes Steuerverfahren mittels einer Vielzahl von Schaltern an einen Betriebspunkt geführt werden, der für den einzelnen Wechselrichter optimal ist.

Wenngleich ein elektrischer Wechselrichter eine hohe Effizienz bei der Energieumsetzung hat, so ist doch zu verzeichnen, dass er aufgrund der in ihm enthaltenen Kondensatoren von ziemlich großer elektrischer Kapazität relativ träge reagiert. Derzeit muss man mit 20 Sekunden bis 3 Minuten rechnen, bis ein solcher Wechselrichter an eine Änderung der momentan vorliegenden Sonnenenergie-Einstrahlung mittels seiner Regelungseinrichtung angepasst wird.

Die Erfindung basiert auf der Überlegung, dass für größere Anlagen von 1 MW und mehr als Zwischenglied zwischen den Photovoltaik-Modulen und dem StromVersorgungsnetz die Kombination von einem Gleichstrom-Motor mit einem Drehstrom-Generator Vorteile bringt. Gleichstrom-Motoren und Drehstrom-Generatoren für solch hohe Leistungen sind auf dem Markt verfügbar. Ein großer Vorteil einer solchen Kombination gegenüber einer Mehrzahl von elektrischen Wechselrichtern liegt darin, dass sie infolge der geringen Anzahl an Komponenten weniger von statistisch auftretenden Ausfällen betroffen sind. Ein weiterer Vorteil liegt darin, dass weniger Wartungseinsätze erforderlich sind. Und vorteilhaft ist auch, dass im Betrieb nur zwei Einheiten, nämlich der Gleichstrom-Motor und der Drehstrom-Generator, überwacht werden müssen.

Aus der DE 20 2006 002 726 U1 ist ein Motor-Generator-Satz zum Betreiben an einer Solaranlage bekannt. Diese Schrift befasst sich jedoch lediglich mit der Mechanik des Motor-Generator-Satzes. Sie sieht auf einer Welle mehrere Polräder vor, die jeweils in einem eigenen Ständer laufen. Durch diese Maßnahme soll der Wirkungsgrad bei der Umsetzung der regenerativen Energie erhöht werden, wie es auch das Anliegen der oben genannten DE 100 61 724-A1 ist. Die Erhöhung des Wirkungsgrades bei der Energie-Umformung ist jedoch nicht das Ziel der vorliegenden Erfindung.

In der Praxis hat es sich als schwierig erwiesen, einen elektromechanischen Maschinensatz, bestehend aus einem Gleichstrom-Motor und einem Drehstrom-Generator, anzufahren, weil insbesondere morgens die benötigte Mindestenergie, die erforderlich ist, um den Maschinensatz auf eine für die Synchronisation erforderliche Drehzahl zu bringen, nicht ausreicht, oder weil eine langwierige Synchronisation erfolgt. Ein elektromechanischer Maschinensatz von z. B. 4 MW hat ungefähr ein Gewicht von ca. 10 000 kg und entsprechend große, auf Drehzahl zu bringende Massen. Diese Massen müssen von der Solaranlage beim insbesondere morgendlichen Anfahren erst in Schwung gebracht werden, um die Synchronisation mit dem Netz zu ermöglichen. Ferner wird bei langsam rotierendem Maschinensatz ein erhöhter Verbrauch der Kommutator- oder Kontakt-Kohlen im Gleichstrom-Motor anfallen. Dieses führt auf die Dauer zu einem unerwünschten Verschleiß.

Ausgehend von dieser Erkenntnis hat es sich vorliegende Erfindung zur Aufgabe gemacht, bei einer Photovoltaik-Anlage hoher Leistung ein Verfahren anzugeben, um die Anfahrphase zu verkürzen und die Synchronisationsbedingungen früher zu erreichen sowie den Verschleiß der Kommutator-Kohlen zu reduzieren. Außerdem soll eine Photovoltaik-Anlage angegeben werden, die diese Bedingungen erfüllt.

Diese Aufgabe wird erfindungsgemäß gemäß dem Verfahren dadurch gelöst, dass die Motorachse eines zweiten Gleichstrom-Motors mit der Welle verbindbar ist, und dass die von den Photovoltaik-Modulen erzeugte elektrische Energie zunächst nur zum Antrieb eines der beiden Gleichstrom-Motoren verwendet und im weiteren Betriebsverlauf auf beide Gleichstrom-Motoren aufgeteilt wird.

Durch diese Maßnahme wird erreicht, dass die gesamte zur Verfügung stehende Energie aller Photovoltaik-Module jeweils zum Anfahren eines der beiden Gleichstrom-Motoren verwendet werden kann. Dieses verkürzt die Anlaufzeit bis zum erreichen der Synchronisationsbedingungen. Es wird also gegenüber dem Stand der Technik ein einziger, relativ großer und träger Gleichstrom-Motor durch zwei kleinere, leichter an Synchronisationsbedingungen anpassbare Gleichstrom-Motoren ersetzt.

Es ist vorteilhaft, wenn der erste Gleichstrom-Motor zunächst alleine mit dem Drehstrom-Generator verbunden ist, und wenn erst anschließend bei Erreichung der Nennleistung des ersten Gleichstrom-Motors der zweite Gleichstrom-Motor zugeschaltet wird. Das bedeutet, dass der erste Gleichstrom-Motor bereits voll angepasst an die Netzbedingungen arbeitet und die halbe vorliegende, von den Photovoltaik-Modulen erzeugte elektrische Energie voll zum Anfahren des zweiten Gleichstrom-Motors genutzt werden kann.

Es ist auch eine asymmetrische Aufteilung der zur Verfügung stehenden Modulzahl möglich, beispielsweise 70 % zu 30 % zugunsten des zuzuschaltenden zweiten Gleichstrom-Motors.

Eine vorteilhafte Ausgestaltung sieht vor, dass der erste und/oder der zweite Gleichstrom-Motor über eine Kupplung mit der Welle des Drehstrom-Generators verbindbar sind/ist. Diese Maßnahme bedeutet ein Höchstmaß an Flexibilität bei der Steuerung der Anlage. So z. B. besteht die Wahl, zuerst den ersten oder zuerst den zweiten Gleichstrom-Motor auf die Einhaltung der Zuschaltbedingungen hin hochzufahren, und dann den jeweils anderen später.

In diesem Zusammenhang ist es auch vorteilhaft, spätestens beim Umschalten die Photovoltaik-Module in eine erste und in eine zweite Menge aufzuteilen, wobei die erste Menge die von ihr erzeugte Leistung an einem ersten Ausgang und die zweite Menge die von ihr erzeugte Leistung an einem zweiten Ausgang zur Verfügung stellt. Der erste und der zweite Ausgang sind dann jeweils mittels eines Schaltelementes mit dem Eingang des ersten bzw. des zweiten Gleichstrom-Motors verbindbar. Ein Brückenschalter verbindet im geschlossenen Zustand den ersten Ausgang mit dem zweiten Ausgang in der Weise, dass beide Ausgänge parallel geschaltet werden.

Bezüglich der Photovoltaik-Anlage zur Durchführung des Verfahrens wird die Aufgabe erfindungsgemäß gelöst durch eine Vielzahl von Photovoltaik-Modulen, zwei an die Photovoltaik-Module zuschaltbare Gleichstrom-Motoren, die bei Zuschaltung von den Photovoltaik-Modulen mit einer Gleichspannung und einem Gleichstrom gespeist werden, und einen Drehstrom-Generator, dessen Welle mit dem ersten und/oder dem zweiten Gleichstrom-Motor mittels jeweils einer Kupplung verbindbar ist und der zur Zuleitung der von ihm erzeugten Wechselspannung an ein Stromversorgungsnetz anschließbar ist.

Auch hier ist es vorteilhaft, wenn die Photovoltaik-Module in eine erste und in eine zweite Menge aufgeteilt sind, wenn die erste Menge die von ihr erzeugte Leistung an einem ersten Ausgang und die zweite Menge die von ihr erzeugte Leistung an einem zweiten Ausgang zur Verfügung stellt, wobei der erste und der zweite Ausgang jeweils mittels eines Schaltelementes mit dem Eingang des ersten bzw. des zweiten Gleichstrom-Motors verbindbar sind, und wenn ein Brückenschalter im geschlossenen Zustand den ersten Ausgang zum zweiten Ausgang parallel schaltet.

Die erste und die zweite Menge sollten bevorzugt gleich groß sein, insbesondere wenn die Nennleistungen der beiden Gleichstrom-Motoren gleich groß sind.

Wenn ein späterer Ausbau der Photovoltaik-Anlage mit in die Planung einbezogen werden muss, ist es sinnvoll, Gleichstrom-Motoren mit unterschiedlicher Leistung vorzusehen, wobei die Nennleistung eines der beiden Gleichstrom-Motoren bereits die Ausbaustufe mit berücksichtigen sollte.

Für die Logistik des Transports und aus Gründen der Montagevereinfachung vor Ort sowie für die Vorratshaltung von den elektromechanischen Konvertern kann vorgesehen sein, dass die beiden Gleichstrom-Motoren, der Drehstromgenerator, eine zugehörige Steuer- und Regeleinheit, die Schalter und der Brückenschalter in einem Frachtcontainer fest installiert sind. Der Frachtcontainer kann als Ganzes verschifft und auf der Baustelle auf bereitstehende Fundamente verbracht werden, wobei lediglich noch der Anschluss des Zuführungskabels von den Photovoltaik-Modulen und der Anschluss des Zuleitungskabels zum Netz vorzunehmen sind.

Die Vorteile der Erfindung sollen anhand eines mit Zahlenangaben versehenen Beispiels, das nicht beschränkend sein soll, kurz erläutert werden.

Es wird ausgegangen als Stand der Technik von einer Photovoltaik-Anlage mit einer Vielzahl von Photovoltaik-Modulen und mit einer Maximal-Leistung von insgesamt 1 MW. Die Vielzahl der vorhandenen Photovoltaik-Module ist auf einen Gleichstrom-Motor abgestellt, dessen Nennleistung 1 MW beträgt. Der Gleichstrom-Motor treibt einen Drehstrom-Generator, der ebenfalls für eine Nennleistung von 1 MW ausgelegt ist.

Gemäß der Erfindung ist nun neben einem ersten Gleichstrom-Motor ein zweiter Gleichstrom-Motor vorgesehen, der ebenfalls zwecks Antriebs an einen Drehstrom-Generator angeschlossen werden kann. Die Vielzahl der Photovoltaik-Module besitzt auch hier wieder eine Maximal-Leistung von insgesamt 1 MW. In diesem Fall ist die Vielzahl der Photovoltaik-Module aufteilbar in zwei Photovoltaik-Blöcke von jeweils einer Maximal-Leistung von 0,5 MW. Der erste Gleichstrom-Motor hat hier aber eine Nennleistung von nur 0,5 MW. Seine Nennleistung beträgt also die Hälfte der Nennleistung, die im vorangenannten Stand der Technik bei dem einzig vorhandenen Gleichstrom-Motor vorausgesetzt wurde. Der zweite Gleichstrom-Motor hat hier dieselbe Nennleistung von 0,5 MW. Der Drehstrom-Generator hat hier wiederum eine Nennleistung von 1 MW. Hierauf ist dieses Beispiel bewusst abgestellt.

Beim Anfahrvorgang werden gemäß der Erfindung in diesem Beispiel beide Photovoltaik-Blöcke der Maximal-Leistung von 0,5 MW zunächst gemeinsam nur auf den ersten Gleichstrom-Motor mit einer Nennleistung von 0,5 MW geschaltet. Dies geschieht so lange, bis ein Umschaltvorgang eingeleitet wird. Dies Umschalten ist dann der Fall, wenn z. B. 65 bis 80 % der Nennleistung des ersten Gleichstrom-Motors erreicht sind, also bei einer Aufnahmeleistung von 0,325 bis 0,40 MW. Beim Umschaltvorgang werden die Photovoltaik-Module in zwei Photovoltaik-Blöcke aufgeteilt, und zwar etwa gleichmäßig in zwei Blöcke gleicher Größe. Es entstehen somit zwei Blöcke, die jeweils eine Maximal-Leistung von 0,5 MW aufweisen. Nach dem Umschalten wird die Leistung des ersten Blocks von bis zu 0,5 MW auf den ersten Gleichstrom-Motor und es wird die Leistung des zweiten Blocks von bis zu 0,5 MW auf den zweiten Gleichstrom-Motor gegeben.

Es ist festzuhalten, dass hier gegenüber dem soeben erwähnten Stand der Technik am Anfang nur ein einziger Gleichstrom-Motor mit einer Nennleistung von 0,5 MW hochgefahren wird. Dies geht wesentlich schneller vor sich als das Hochfahren des einzigen Gleichstrom-Motors mit einer Nennleistung von 1 MW gemäß dem Stand der Technik bei gleicher Photovoltaik-Leistung. Dies liegt an den unterschiedlichen Massenträgheitsmomenten. Zu betonen ist nochmals, dass dabei der Drehstrom-Generator wiederum für eine Nennleistung von 1 MW ausgelegt ist.

Es ist also folgendes festzuhalten: Der zweite Gleichstrom-Motor läuft erst dann an, wenn eine relativ hohe Leistung der Gesamtheit der Photovoltaik-Module vorliegt. Auch der zweite Gleichstrom-Motor, der wie der erste Gleichstrom-Motor gegenüber dem einzigen Gleichstrom-Motor nach dem Stand der Technik ein relativ geringes Massenträgheitsmoment besitzt, kann nun relativ schnell hochlaufen. Der Hochlaufvorgang wird somit gegenüber dem Stand der Technik bedeutend verkürzt. Damit können die bekannten Synchronisationsbedingungen (Erreichen der Netzfrequenz durch den Drehstrom-Generator, Angleichen der Phasenlage zwischen Drehstrom-Generator und Netz) schneller erreicht, sowie es kann der Verschleiß der Kohlebürsten auf Dauer reduziert werden. Durch das schnellere Erreichen der Synchronisationsbedingungen kann eher Energie in das Stromversorgungsnetz eingespeist werden. Dies kann sich beim finanziellen Erlös, der durch den Verkauf des Stroms an den Betreiber des Versorgungsnetzes erzielt wird, positiv bemerkbar machen.

Ausführungsbeispiele der Erfindung werden nun anhand der beigefügten Figuren näher erläutert. Dabei ist anzumerken, dass die Figuren 2 und 3 sich auf den Betrieb mit zwei Gleichstrom-Motoren und die Figur 4 sich auf einen Container zur Vorfertigung des elektromechanischen Konverters als in sich abgeschlossene Baueinheit beziehen. Es zeigen:

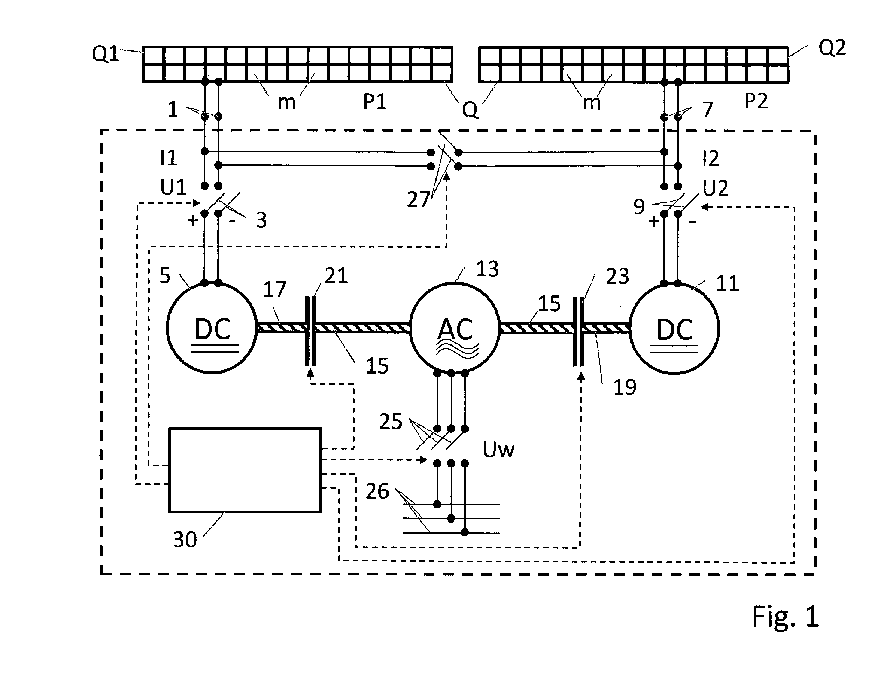

Fig. 1 ein Prinzipschaltbild einer Photovoltaik-Anlage mit einem elektromechanischen
   Konverter mit zwei Gleichstrom-Motoren und einem Drehstrom-Generator,

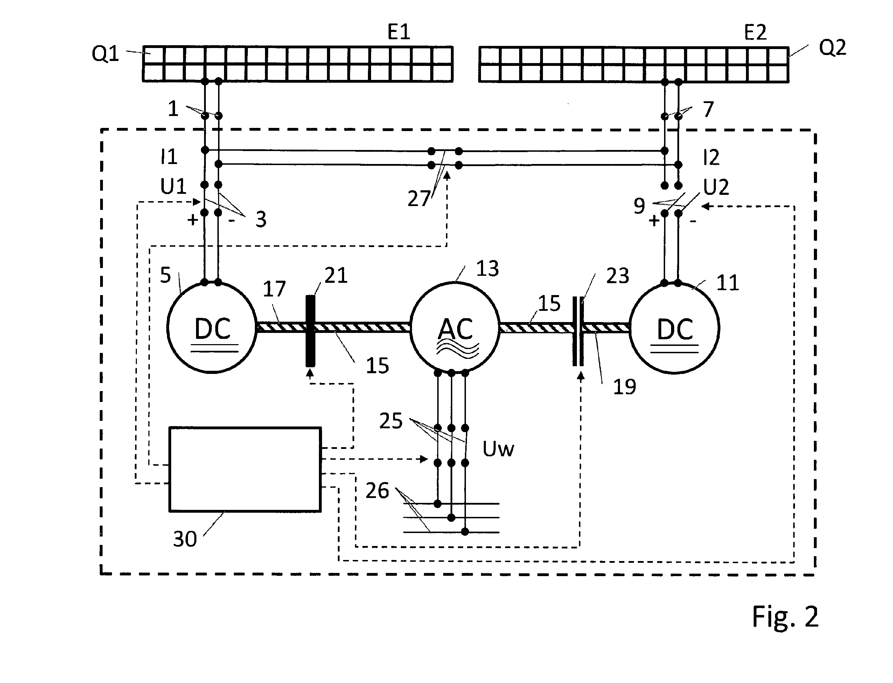

Fig. 2 den Schaltzustand der Photovoltaik-Anlage von Fig. 1 im Teillastbetrieb,

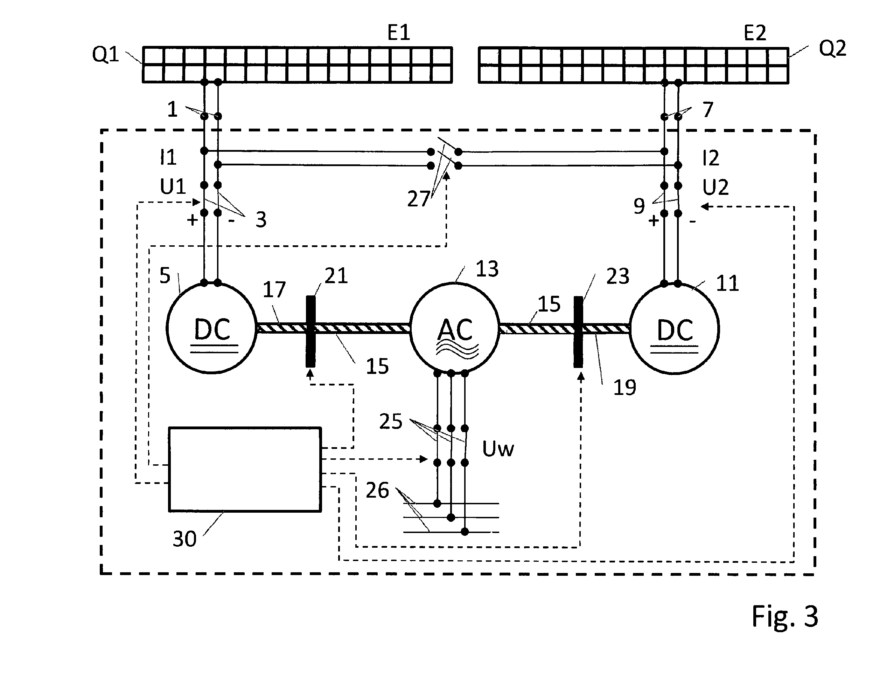

Fig. 3 den Schaltzustand der Photovoltaik-Anlage von Fig. 1 im Voll-Lastbetrieb und

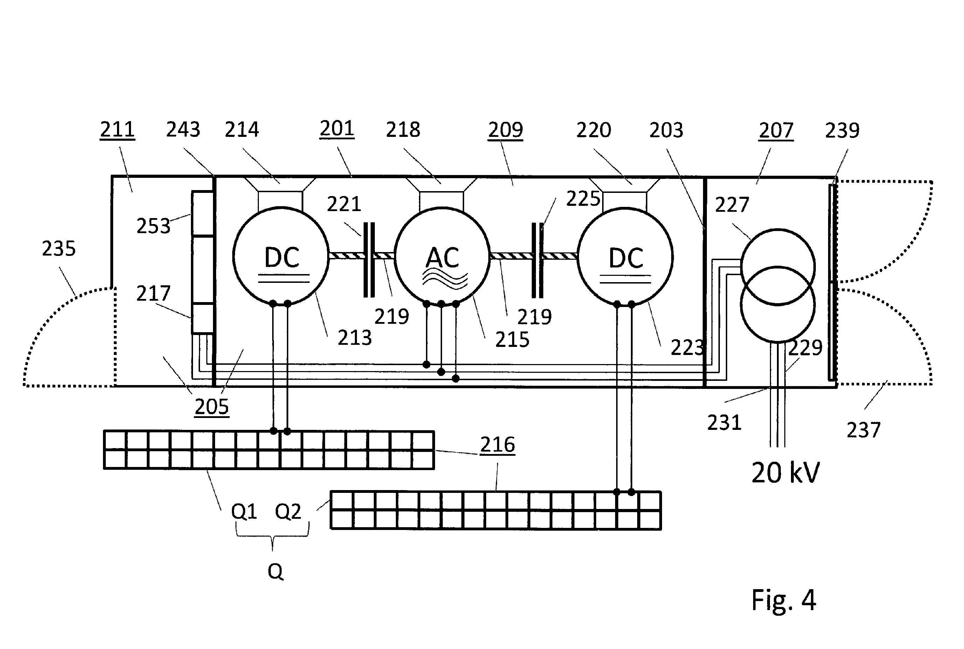

Fig. 4 einen Container, der einen elektromechanischen Konverter enthält.

In Figur 1 ist mit Q1 eine erste Menge an Photovoltaik-Modulen m als erste Energiequelle mit einer ersten Nennleistung bezeichnet. Diese erste Menge Q1 weist einen ersten Ausgang mit einem Ausgangsklemmenpaar 1 auf, an denen eine erste Gleichspannung U1 und ein erster Gleichstrom 11 abgreifbar sind. Über einen ersten Schalter 3 kann das Ausgangsklemmenpaar 1 mit einem ersten fremderregten Gleichstrom-Motor 5 verbunden werden, um diesen anzutreiben. Die Leistung P1 des ersten Gleichstrom-Motors 5 kann über seinen Erregerstrom, mit Hilfe einer Regel-und Steuereinheit 30 geregelt werden, z. B. nach der sogenannten bekannten MPP-Regelung gemäß EU-PS 1,863,165 (= US-PS 7,609,019).

Analog hierzu ist, wie auf der rechten Figurenseite gezeigt, eine zweite Menge Q2 an Photovoltaik-Modulen m als zweite Energiequelle mit einer zweiten Nennleistung vorgesehen. Die zweite Menge Q2 weist einen zweiten Ausgang mit einem zweiten Ausgangsklemmenpaar 7 auf, an denen eine zweite Gleichspannung U2 und ein zweiter Gleichstrom I1 abgreifbar sind. Über einen zweiten Schalter 9 kann das Ausgangsklemmenpaar 7 mit einem zweiten fremderregten Gleichstrom-Motor 11 verbunden werden, um diesen anzutreiben. Die Leistung P2 des zweiten Gleichstrom-Motors 11 kann ebenfalls über seinen Erregerstrom mit Hilfe der Regel-und Steuereinheit 30 geregelt werden, z. B. ebenfalls nach der bekannten MPP-Regelung. Die beiden Gleichstrom-Motoren 5, 11 sind für dieselbe Nennleistung ausgelegt, beispielsweise für jeweils 1,25 MW. Abweichend davon kann aber auch eine andere Nennleistung vorliegen, beispielsweise jeweils 0,8 MW oder 2,0 MW.

Zwischen den beiden Gleichstrom-Motoren 5, 11 ist ein Drehstrom-Generator 13 angeordnet, dessen durchgehende Welle 15 mit den beiden Motorwellen 17, 19 der Gleichstrom-Motoren 5 bzw. 11 fluchtet. Die Generatorwelle 15 ist links und rechts vom Drehstrom-Generator 13 herausgeführt und am jeweils freien Ende mit einer ersten bzw. zweiten Kupplung 21 bzw. 23 versehen. Mittels der Kupplungen 21, 23 sind die Motorwellen 17, 19 der Gleichstrom-Motoren 5 bzw. 11 getrennt mit dem Drehstrom-Generator 13 verbindbar. Der Drehstromgenerator 13 weist ausgangsseitig ein elektrisches Anschluss- oder Schaltelement 25 auf, um ihn zwecks Weitergabe seiner Wechselspannung U_{w} an ein Stromversorgungsnetz 26 anzuschließen. Die Steuer- und Regeleinheit 30 dient zum Schalten der Schalter 3, 9, aber auch des Schaltelements 25, was durch gestrichelte Linien verdeutlicht ist.

Die Steuer- und Regeleinheit 30 ist auch zur Betätigung eines Brückenschalters 27 vorgesehen, der die Ausgangsklemmen 1 und 7 mit einander verbindet. Bei geschlossenem Brückenschalter 27 sind die beiden Ausgänge 1 und 7 parallel geschaltet. Beim Anfahrbetrieb des ersten Gleichstrom-Motors 5 ist der Brückenschalter 27 geschlossen und die Leistung der zweiten Energiequelle Q2 steht ebenfalls am Eingang des ersten Gleichstrom-Motors 5 zur Verfügung. Erreicht die Leistung des ersten Gleichstrom-Motors 5 einen vorgegebenen Wert, insbesondere z. B. seine Nennleistung, wird der Brückenschalter 27 geöffnet. Die von der Energiequelle Q2 erzeugte elektrische Energie wird dann zum Anfahren und weiteren Betrieb des zweiten Gleichstrom-Motors 11 verwendet. Ist die Drehzahl von dessen Achse 19 an die der Welle 15 angepasst, wird von der Steuer- und Regeleinheit 30 ein Signal zur Einleitung des Einkupplungsvorgangs der Kupplung 23 gegeben. Nach erfolgter Ankopplung bilden die Achsen 17, 19 zusammen mit der Welle 15 einen gemeinsamen Drehverbund.

In Fig. 2 ist der Teillastbetrieb oder Anfahrbetrieb dargestellt. Hierbei wird nur der erste Gleichstrom-Motor 5 in Betrieb genommen. Dabei ist der zweite Schalter 9 geöffnet, und der Brückenschalter 27 ist geschlossen, so dass beide Mengen Q1, Q2 an Photovoltaik-Modulen m parallel geschaltet sind. Die Leistung E2 der zweiten Energiequelle steht somit neben der Leistung E1 der ersten Energiequelle am Eingang des ersten Elektromotors 5 zur Verfügung. Und dabei ist die erste Kupplung 21 geschlossen, so dass der erste Gleichstrom-Motor 5 ausgangsseitig über die Wellen 17 und 15 mit dem Drehstrom-Generator 13 verbunden ist. Die beiden Photovoltaik-Energiequellen arbeiten somit gemeinsam auf den Drehstrom-Generator 13, so daß dieser nach der in bekannter Weise vorgenommenen Synchronisation Leistung in das Stromversorgungsnetz 26 einspeisen kann, sobald der Schalter 25 geschlossen ist.

Nun wird überwacht, wann die Leistung des ersten Gleichstrom-Motors 5 einen vorgegebenen Wert erreicht, insbesondere 65 bis 80 % der Nennleistung, für die der Gleichstrom-Motor 5 ausgelegt ist. Dies kann mit Hilfe eines (nicht gezeigten) Messglieds geschehen, das aus der ersten Spannung U1 und dem ersten Strom I1 das Produkt bildet und dieses Produkt mit dem vorgegebenen Wert vergleicht. Das Vergleichsglied kann in der Steuer- und Regeleinheit 30 enthalten sein. Beim Erreichen des vorgegebenen Leistungswerts wird von der Einheit 30 ein Umschaltvorgang eingeleitet.

Nach dem Umschaltvorgang beginnt der Voll-Lastbetrieb, der in Fig. 3 dargestellt ist. Beim Umschaltvorgang werden also die in Fig. 3 dargestellten Schaltstellungen eingenommen. Nun ist der Brückenschalter 27 geöffnet, und der Schalter 9 ist geschlossen. Der Schalter 3 ist nach wie vor geschlossen. Die von der zweiten Menge Q2 erzeugte elektrische Leistung E2 wird hier also zum Anfahren und weiteren Betrieb allein des zweiten Gleichstrom-Motors 11 verwendet.

Ist die Drehzahl der Motorwelle 19 an die der Welle 15 angepasst, wird von der Steuer- und Regeleinheit 30 über die gestrichelt eingezeichnete Steuereinleitung ein Signal zur Einleitung des Einkuppelvorgangs der zweiten Kupplung 23 gegeben. Nach erfolgter Einkupplung bilden die Motorwellen 17 und 19 gemeinsam mit der Welle 15 einen Drehverbund.

In der in den Fig. 1 bis 3 beschriebenen Anlage ist - gegenüber einer Anlage mit einem einzigen Gleichstrom-Motor, der zum Antrieb des Drehstrom-Generators gleicher Leistung eingesetzt wird - die Anfahrzeit verkürzt. Da im Laufe einer Woche oder sogar eines Tages eine ganze Anzahl von Anfahrvorgängen erforderlich ist, summiert sich die im Laufe eines Jahres eingesparte Anfahrzeit zu einem Potential, das bei großen Photovoltaik-Anlagen finanziell deutliche ins Gewicht fallen kann.

Gemäß Fig. 4 können alle der bisher genannten Komponenten einer Photovoltaik-Anlage in einem Frachtcontainer 201 fest installiert sein, der z. B. auf der Straße transportiert werden kann.

Im folgenden wird anhand der Fig. 4 die Unterbringung eines erfindungsgemäßen elektromechanischen Konverters in einem auf der Straße transportierbaren Überseecontainer 201 beschrieben. Es ist zu beachten, dass hier zu Fig. 1 bis 3 gleiche Bauteile mit anderen Bezugszeichen versehen sind.

Kurz gefasst lässt sich sagen: In einem Maschinenraum 209 sind ein erster und ein zweiter Gleichstrom-Motor 213, 223 montiert, die auf eine gemeinsame Welle 219 eines Drehstrom-Generators 215 wirken. Der erste und der zweite Gleichstrom-Motor 213, 223 ist jeweils über eine Schaltkupplung 221 bzw. 225 an die Welle 219 anschließbar und von der Welle 219 abtrennbar. Dabei kann der erste Gleichstrom-Motor 213 mit der erzeugten Leistung P1 eines ersten Teils der Photovoltaik-Module 216 und der zweite Gleichstrom-Motor 223 mit der erzeugten Leistung P2 eines zweiten Teils der Photovoltaik-Module 216 betrieben werden. Eine Steuer- und Regelvorrichtung 217 und von außen eingeführte, nicht näher bezeichnete Stromzufuhrkabel zu den Gleichstrom-Motoren 213, 223 sind gleichfalls vorgesehen, ebenso wie Frischluft-Einleitungen 214, 218, 220 an den Komponenten 213, 215 bzw. 223.

Der Container 201 ist mit einer ersten Zwischenwand 203 versehen, die das Innere des Containers 201 in einen ersten und einen zweiten Innenraum 205 bzw. 207 unterteilt. Die erste Zwischenwand 203 genügt dabei den Anforderungen, die von dem Land des jeweiligen Einsatzes an Mittelspannungsanlagen gestellt werden. Die erste Zwischenwand 203 kann geschlossen aus Metall gefertigt sein oder durch ein metallisches Gitter gebildet sein, welches an eine geeignete Erdung (nicht gezeigt) angeschlossen ist. Unter Mittelspannung wird eine Spannung verstanden, die von dem lokalen Energieversorgungsunternehmen herangezogen wird, um Ortschaften oder Stadtteile mit elektrischem Strom zu versorgen. Sie liegt in der Regel zwischen 12 und 34 KV. Der erste Innenraum 205 weist eine zweite Zwischenwand 243 auf, die ihn in einen Maschinenraum 209 und in einen Kontrollraum 211 unterteilt. Im Maschinenraum 209 sind der fremderregte Gleichstrommotor 213 und der Drehstrom-Generator 215 untergebracht. Im Kontrollraum 211 befindet sich die zugehörige Steuer- und Regeleinrichtung 217 für die Steuerung der Maschinen 213, 223 und für eine angeschlossene elektrische Photovoltaik-Anlage 216. Die in den Räumen 207, 209, 211 verlegten Leitungen sind im Einzelnen nicht gezeigt. Es handelt sich um die üblichen Verbindungen, wie z. B. die Steuerleitungen zu dem ersten und zweiten Gleichstrom-Motor 213 bzw. 223 und dem Drehstrom-Generator 215, die Versorgungsleitungen für die Steuer- und Regelvorrichtung 217, die Leitungsverbindungen zu dem Drehstrom-Generator 215, etc.

Im Raum 207 ist ein Transformator 227 zur Verbindung mit einem Versorgungsnetz, das eine Mittelspannung von z. B. 20 KV führt, vorgesehen.

Der erste Gleichstrom-Motor 213 und der Wechselstrom-Generator 215 werden von der gemeinsamen ein- oder mehrteiligen Welle 219 betrieben. Die Welle 219 weist zwischen den Maschinen 213, 215 eine erste Schaltkupplung 221 auf, die geeignet ist, bei entsprechendem Steuersignal von der Steuer- und Regeleinrichtung 217 her den ersten Gleichstrom-Motor 213 von dem Drehstrom-Generator 215 zu trennen oder beide Maschinen 213, 215 miteinander zu verbinden. In dem Maschinenraum 209 ist der zweite fremderregte Gleichstrom-Motor 223 montiert, der ebenfalls auf die gemeinsame Welle 219 wirkt, und der über eine zweite Schaltkupplung 225 an die Welle 219 anschließbar und von der Welle 219 abtrennbar ist.

Der erste Gleichstrom-Motor 213 wird mit der erzeugten Leistung E1 eines ersten Teils Q1 der Photovoltaik-Module 216 betrieben, und der zweite Gleichstrom-Motor 223 wird mit der erzeugten Leistung E2 eines zweiten Teils Q2 der Photovoltaik-Module 216 betrieben. Dabei ist es unerheblich, ob eine große Photovoltaik-Modulanordnung 216 in die zwei Teile Q1 und Q2 aufgeteilt wird, die z. B. unterschiedliche Himmelsausrichtungen haben können, oder ob es sich um zwei räumlich getrennte Anlagen Q1 und Q2 handelt, die an den gemeinsamen Konverter-Container 201 angeschlossen sind. Die Steuer- und Regeleinrichtung 217 und die Stromzufuhrkabel zu den Gleichstrom-Motoren 213 und 223 sind so ausgebildet, dass die Zufuhr der im ersten Teil Q1 der Photovoltaik-Module 216 erzeugten Energie derart umschaltbar ist, dass sie zusätzlich zur Zufuhr der im zweiten Teil Q2 der Photovoltaik-Anlage 216 erzeugten Energie zum Antrieb des zweiten Gleichstrom-Motors 223 eingesetzt wird. Bei dieser Betrachtung ist es willkürlich, welcher der erste und welcher der zweite Gleichstrom-Motor 213, 223 ist. Es ist genauso gut denkbar, die im zweiten Teil Q2 erzeugte Energie dem Gleichstrom-Motor 213 zuzuschlagen, der dem ersten Teil Q1 zugeordnet ist. Diese Vorgehensweise ist besonders sinnvoll, wenn die Teile Q1 und Q2 der Photovoltaik-Module oder besser des Photovoltaik-Systems einige 100 Meter oder gar Kilometer voneinander entfernt sind. Dann nämlich kann bei wechselnder Bewölkung folgendes bedeutsam sein: Wenn die Energie, die von der von Wolken abgeschatteten Photovoltaik-Anlage Q1 erzeugt wird, selber nicht ausreicht, um den zugeordneten Gleichstrom-Motor effizient anzutreiben, dann kann diese Energie zum Einspeisen zu der anderen Photovoltaik-Anlage Q2 verwendet werden, die womöglich zur selben Zeit in einem Sonnenbereich liegt.

Daraus folgt, dass die Steuer- und Regeleinrichtung 217 für die Überwachung und Steuerung des ersten Teils Q1 und des zweiten Teils Q2 der Photovoltaik-Module 216 ausgelegt ist. Sie sorgt dafür, dass die dem ersten Teil Q1 oder zweiten Teil Q2 der Photovoltaik-Anlage 216 zugeordnete Schaltkupplung 221 oder 225 bei Unterschreiten eines zur Verfügung stehenden ersten Mindestenergiewerts von der Welle 219 getrennt wird und bei Überschreiten eines zur Verfügung stehenden immer einen der beiden Gleichstrom-Motoren 213, 223 an einem effizienten Arbeitspunkt zu betreiben.

In dem zweiten Innenraum 207 des Containers 201 ist ein Transformator 227 untergebracht, der die von dem Drehstrom-Generator 215 erzeugte Spannung von 400 Volt auf eine Mittelspannung von z. B. 20 kV hoch transformiert. Die 20 kV-Sekundärseite des Transformators 227 ist über Kabel 229, die durch eine Öffnung 231 im Boden des Containers 201 geführt sind, mit einem EVU-Netz verbunden. An seiner Außenwand können am Container 201 Steckverbindungen angebracht sein, die zum Anschluss der Steuereinrichtung, der Stromzufuhr zum Gleichstrom-Motor, des Transformators, von Kontrollgeräten etc. ausgebildet sind.

Der Container 201 ist vorzugsweise ein 40-Fuß-Standard-Frachtcontainer, bei dem an einer Stirnseite der erste Innenraum 205 durch eine erste Tür 235 und der zweite Innenraum 207 durch eine zweite Tür 237 von außen zugänglich sind. Die zweite Tür 237 ist eine Doppelflügeltür, die sich fast über die gesamte Stirnseite des Containers 201 erstreckt und die im wesentlichen über ihre gesamte Fläche mit Aussparungen versehen ist, hinter denen Schall-Filterelemente 239 angeordnet sind. Die erste Tür 235 ist auf der anderen Stirnseite des Containers 201 angeordnet. Der Zugang zum Maschinenraum 209 ist über eine (nicht gezeigte) dritte Tür möglich, die sich in der zweiten Zwischenwand 243 befindet, die - wie bereits zuvor ausgeführt - den ersten Innenraum 205 in den Maschinenraum 209 und den Kontrollraum 211 unterteilt. Oberhalb und seitlich der Gleichstrom-Motoren 213, 223 sind die erwähnten Luftauslass-Öffnungen 214, 220 vorgesehen. Ebenso kann am Drehstrom-Generator 215 die Luftauslass-Öffnung 218 vorgesehen sein.
9 Patentansprüche
4 Figuren

### Bezugszeichenliste:

- 1: erster Ausgang, Ausgangsklemmenpaar
- 3: erster Schalter, Schaltelement
- 5: erster Gleichstrom-Motor

- 7: zweiter Ausgang, Ausgangsklemmenpaar
- 9: Schaltelement
- 11: zweiter Gleichstrom-Motor
- 13: Drehstrom-Generator
- 15: Welle des Drehstrom-Generators 13
- 17, 19: Motorwelle
- 21,23: Kupplung
- 25: Anschluss- oder Schaltelement
- 26: Stromversorgungsnetz
- 27: Brückenschalter
- 30: Regel- und Steuereinheit
- 201: Frachtcontainer
- 203: erste Zwischenwand
- 205, 207: erster und zweiter Innenraum
- 209: Maschinenraum
- 211: Kontrollraum
- 213: erster Gleichstrom-Motor
- 214: Entlüftung /Luftauslass-Öffnung
- 215: Drehstrom-Generator
- 216: Photovoltaik-Module
- 217: Steuer- und Regeleinrichtung
- 218: Entlüftung /Luftauslass-Öffnung
- 219: Welle
- 220: Entlüftung /Luftauslass-Öffnung
- 221: Schaltkupplung
- 223: zweiter Gleichstrom-Motor
- 225: Schaltkupplung
- 227: Transformator
- 229: Kabel
- 231: Öffnung im Container 201
- 235, 237: erste, zweite Tür
- 239: Schall-Filterelemente
- 243: zweite Zwischenwand

- E1, E2: erste, zweite elektrische Leistung
- I1, I2: erster, zweiter Gleichstrom
- m: Photovoltaik-Modul
- P1, P2: Leistung
- Q: Gesamtmenge der Photovoltaik-Module m
- Q1, Q2: erste, zweite Menge der Photovoltaik-Module m
- U1, U2: erste, zweite Gleichspannung
- U_{w}: Wechselspannung

## Patentansprüche

1. Verfahren zum Betrieb einer Photovoltaik-Anlage mit einer Vielzahl von Photovoltaik-Modulen (m) und mit einem an die Photovoltaik-Module (m) anschließbaren ersten Gleichstrom-Motor (5), dessen Motorwelle (17) an eine Welle (15) eines Drehstrom-Generators (13) ankoppelbar ist, wobei der Drehstrom-Generator (13) an ein Stromversorgungsnetz (26) anschließbar ist, **dadurch gekennzeichnet, dass** die Motorwelle (19) eines zweiten Gleichstrom-Motors (11) mit der Welle (15) verbindbar ist, und dass die von den Photovoltaik-Modulen (m) erzeugte elektrische Energie (E1, E2) zunächst nur zum Antrieb eines der beiden Gleichstrom-Motoren (5, 11) verwendet und im weiteren Betriebsverlauf auf beide Gleichstrom-Motoren (5, 11) aufgeteilt wird.

2. Verfahren nach Anspruch 1, **dadurch gekennzeichnet, dass** der erste Gleichstrom-Motor (5) zunächst alleine mit dem Drehstrom-Generator (13) verbunden ist, und dass erst anschließend bei Erreichung einer vorgegebenen Leistung, insbesondere im Bereich zwischen 65 % und 80 % der Nennleistung des ersten Gleichstrom-Motors (5), der zweite Gleichstrom-Motor (11) zugeschaltet wird.

3. Verfahren nach Anspruch 1 oder 2, **dadurch gekennzeichnet, dass** der erste und/oder der zweite Gleichstrom-Motor (5, 11) über eine Kupplung (21, 23) mit der Welle (15) des Drehstrom-Generators (13) verbindbar sind/ist.

4. Verfahren nach einem der Ansprüche 1 bis 3, **dadurch gekennzeichnet, dass** die Photovoltaik-Module (m) in eine erste Menge (Q1) und in eine zweite Menge (Q2) aufgeteilt sind, dass die erste Menge (Q1) die von ihr erzeugte Leistung an einem ersten Ausgang (1) und die zweite Menge (Q2) die von ihr erzeugte Leistung an einem zweiten Ausgang (7) zur Verfügung stellt, wobei der erste und der zweite Ausgang (1, 7) jeweils mittels eines Schaltelements (3, 9) mit dem Eingang des ersten bzw. des zweiten Gleichstrom-Motors (5, 11) verbindbar sind, und dass ein Brückenschalter (27) vorgesehen ist, der im geschlossenen Zustand beim Antrieb nur eines der beiden Gleichstrom-Motoren (5, 11) den ersten Ausgang (1) zum zweiten Ausgang (7) parallel schaltet.

5. Photovoltaik-Anlage zur Durchführung des Verfahrens nach einem der Ansprüche 1 bis 4, **gekennzeichnet durch** eine Vielzahl von Photovoltaik-Modulen (m), zwei an die Photovoltaik-Module (m) zuschaltbare Gleichstrom-Motoren (5, 11), die bei Zuschaltung von den Photovoltaik-Modulen (m) mit einer Gleichspannung (U1, U2) und einem Gleichstrom (11, 12) gespeist werden, und einen Drehstrom-Generator (13), dessen Welle (15) mit dem ersten und/oder dem zweiten Gleichstrom-Motor (5, 11) mittels jeweils einer Kupplung (21, 23) verbindbar ist und der zur Zuleitung der von ihm erzeugten Wechselspannung (U_{w}) an ein Stromversorgungsnetz (26) anschließbar ist.

6. Photovoltaik-Anlage nach Anspruch 5, **dadurch gekennzeichnet, dass** die Photovoltaik-Module (m) in eine erste und in eine zweite Menge (Q1, Q2) aufgeteilt sind, dass die erste Menge (Q1) die von ihr erzeugte Leistung (E1) an einem ersten Ausgang (1) und die zweite Menge (Q2) die von ihr erzeugte Leistung (E2) an einem zweiten Ausgang (7) zur Verfügung stellt, wobei der erste und der zweite Ausgang (1, 7) jeweils mittels eines Schaltelementes (3, 9) mit dem Eingang des ersten bzw. des zweiten Gleichstrom-Motors (5, 11) verbindbar sind, und dass ein Brückenschalter (27) im geschlossenen Zustand den ersten Ausgang (1) zum zweiten Ausgang (7) parallel schaltet.

7. Photovoltaikanlage nach Anspruch 6, **dadurch gekennzeichnet, dass** die erste und die zweite Menge (Q1, Q2) ungefähr gleich groß sind, und dass die beiden Gleichstrom-Motoren (5, 11) für gleiche Nennleistung ausgelegt sind.

8. Photovoltaik-Anlage nach Anspruch 7, **dadurch gekennzeichnet, dass** die Gleichstrom-Motoren (5, 11) für eine Nennleistung zwischen 1 MW und 3 MW ausgelegt sind.

9. Photovoltaik-Anlage nach einem der Ansprüche 6 bis 8, **dadurch gekennzeichnet, dass** die beiden Gleichstrom-Motoren (5, 11), der Drehstrom-Generator (13), eine zugehörige Steuer- und Regeleinheit (30), die Schaltelemente (3, 9) und der Brückenschalter (27) in einem Frachtcontainer (201) fest installiert sind.

10. Photovoltaik-Anlage nach einem der Ansprüche 6 bis 9, **dadurch gekennzeichnet, dass** zur Steuerung der beiden Kupplungen (21, 23), der beiden Schaltelemente (3, 9) und/oder des Brückenschalters (27) eine Steuer- und Regeleinheit (30) vorgesehen ist, die von einer Einrichtung zur Messung der Leistung des ersten Gleichstrom-Motors (5) beaufschlagt ist und die bei Erreichen einer vorgegeben Leistung über eine Steuerleitung mindestens eins der Baueelemente Kupplung (21, 23), Schaltelement (3, 9) und Brückenschalter (27) betätigt, wobei die vorgegebene Leistung insbesondere 65 bis 80 % der Nennleistung des ersten Gleichstrom-Motors (5) beträgt.
